# EUROPEAN PATENT APPLICATION

(11) **EP 2 390 796 A1**
(43) Date of publication of application: **30.11.2011**
(21) Application number: 10733245.4
(22) Date of filing: 22.01.2010
(51) Int. Cl.: G06F 17/30

(54) **METHOD AND SYSTEM FOR REALIZING MESSAGE INTERACTION IN MULTI-TABS APPLICATION**

(30) Priority: 23.01.2009 CN 200910077869
(71) Applicant: Beijing Sogou Technology Development Co., Ltd., Beijing 100084 (CN)
(72) Inventor: LI, Zituo, Beijing 100084 (CN)
(74) Representative: advotec.
(86) International application number: PCT/CN2010/070326
(87) International publication number: WO 2010/083772

(57) **Abstract**

A method for realizing message interaction in a multi-tabs application is disclosed. The method includes: creating a page window corresponding to a tab in a multi-tabs application as a top window (S201); performing the message interaction associated with the page window (S202). A system for realizing message interaction in a multi-tabs application is also disclosed.

## Description

This application claims the priority of Chinese Patent Application No. 200910077869.5, filed on January 23, 2009, in the Chinese Patent Office, entitled "Method and System for Realizing Message Interactions in a Multi-tab Application Program," the entire contents of which are incorporated herein by reference.

### FIELD OF THE INVENTION

The present invention relates to the field of multi-tab application programming and, more particularly, relates to methods and systems for realizing message interactions in a multi-tab application program.

### BACKGROUND OF THE INVENTION

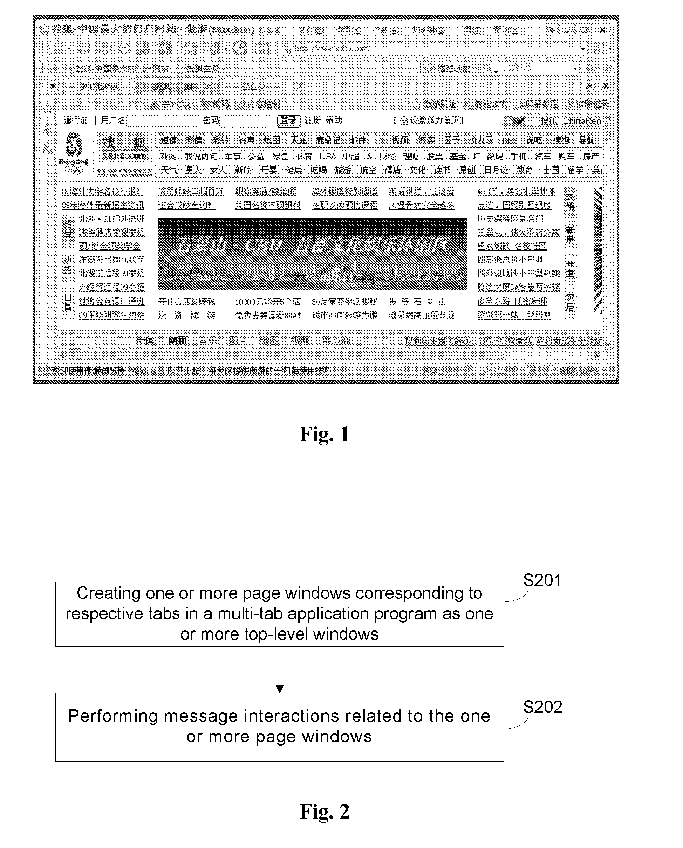

A browser is often the most commonly-used entrance for users to access the Internet. In many cases, the users hope to be able to pay attention to many web pages at the same time. Because the size of a display screen is limited, multi-tab browsers are developed, as shown in Figure 1. In this multi-tab browser, each tab corresponds to a web page, and a user can focus on contents of only one web page at a particular time. However, when the user wants to focus on contents of other web pages, the user only needs to switch the tabs.

Although this type of multi-tab browser can provide convenience for the user to view the web pages, one condition called page hanging (i.e., the user cannot operate on a web page, such as scroll the pages or click on the links, etc.) spreading often occurs. That is, when a single page window is hung, the other page windows are also in a hanging state following the single page window's hanging. For example, if a user opens ten (10) web pages and the current page is Sohu home page, assuming that, when the user is browsing the current page, the current page is suddenly hung, then the user cannot operate on the other nine (9) web pages. At this point, the user has to cancel browsing the other nine pages, ends the browsing process, restarts the browser, and re-opens the nine web pages in order to continue browsing these pages.

### SUMMARY OF THE INVENTION

The present invention is to provide a method and system for realizing message interactions in a multi-tab application program, which can solve the problem of prior art that, when a single page window is hung, the other page windows are also in a hanging state following the single page window's hanging.

To achieve this objective, the present invention provides the following aspects:

A method for performing message interactions in a multi-tab application program, comprising:
creating one or more page windows corresponding to respective tabs in the multi-tab application program as one ore more top-level windows; and
performing message interactions related to the one ore more page windows.

Preferably, creating the page windows corresponding to respective tabs in the multi-tab application program as one ore more top-level windows further includes:
creating the one or more page windows corresponding to the respective tabs in the multi-tab application program as one ore more top-level windows at the same level as a main frame window of the multi-tab application program.

Preferably, performing the message interactions related to the page windows includes:
sending, by a main frame window of the multi-tab application program, one ore more messages to the page windows in a non-blocking mode.

Preferably, the non-blocking mode includes:
an asynchronous message sending mode or a synchronous message sending method with a time-out mechanism.

Preferably, performing the message interactions related to the page windows includes:
creating and storing a mapping relationship between a main frame window of the multi-tab application program and the one ore more page windows;
sending, by the main frame window, one ore more messages to the page windows based on the mapping relationship between the main frame window and the one ore more page windows;
triggering the one ore more page windows to perform one or more operations corresponding to received messages.

Preferably, the method further includes adjusting location and size of the page windows to match a location and size of a main frame window of the multi-tab application program.

Preferably, the method further includes, when hanging of a page window corresponding to a tab is determined, prompting a user.

Preferably, creating the one ore more page windows corresponding to respective tabs in the multi-tab application program as one ore more top-level windows further includes:
when creating a new tab in the multi-tab application program, creating the page window corresponding to the new tab as a top-level window.
Preferably, the multi-tab application program includes a multi-tab web page browser, a multi-tab document editor, or a multi-tab reader.

Preferably, the page windows corresponding to the tabs in the multi-tab application program belong to different threads;
and/or,
a main frame window of the multi-tab application program and the one ore more page windows corresponding to the tabs belong to different threads.

Preferably, creating the page windows corresponding to respective tabs in the multi-tab application program as top-level windows further includes:

creating the page windows corresponding to the respective tabs in the multi-tab application program as one ore more top-level windows with an empty owner.

A system for performing message interactions in a multi-tab application program, comprising:
a window management module configured to create one or more page windows corresponding to respective tabs in the multi-tab application program as one ore more top-level windows;
a message interaction module configured to perform message interactions related to the page windows.

Preferably, the window management module is further used to create the one or more page windows corresponding to the respective tabs in the multi-tab application program as one ore more top-level windows at the same level as a main frame window of the multi-tab application program.

Preferably, the message interaction module is further used in a main frame window of the multi-tab application program to send one ore more messages to the page windows in a non-blocking mode.

Preferably, the message interaction module further includes:
a mapping relationship storing sub-module configured to create and store a mapping relationship between a main frame window of the multi-tab application program and the one ore more page windows;
a communication sub-module, used by the main frame window to send one ore more messages to the one ore more page windows based on the mapping relationship between the main frame window and the one ore more page windows, and also used to trigger the page windows to perform one or more operations corresponding to received messages.

Preferably, the system further includes a window adjustment module configured to adjust a location and size of the one ore more page windows to match a location and size of a main frame window of the multi-tab application program.

Preferably, the system further includes a prompt module configured to prompt a user when a page window is hung.

Preferably, the window management module is further configured to, when creating a new tab in the multi-tab application program, create the page window corresponding to the new tab as a top-level window.
Preferably, the multi-tab application program includes a multi-tab web page browser, a multi-tab document editor, or a multi-tab reader.

Preferably, the system further includes a first creation module configured to create the page windows corresponding to the tabs in the multi-tab application program in different threads;
and/or,
a second creation module configured to create a main frame window of the multi-tab application program and the one ore more page windows corresponding to the one ore more tabs in different threads.

Preferably, the window management module is further configured to create the one ore more page windows corresponding to the respective tabs in the multi-tab application program as one ore more top-level windows with an empty owner.

A computer-readable medium including computer program instructions, when the computer program instructions being executed by a computer unit, instructing the computer unit to:
create one or more page windows corresponding to respective tabs in the multi-tab application program as one ore more top-level windows; and
perform message interactions related to the page windows.

The embodiments of the present invention disclose the following technical effects:

According to the embodiments of the present invention, by creating the page windows corresponding to tabs in the multi-tab application program as top-level windows, the page windows no longer have a parent window. Thus, when performing message interactions related to the page windows, there will not be a situation where a certain parent window sends system messages to the page windows in the blocking mode. Therefore, the problem of page window hanging spreading caused by sending such system messages can be avoided. Even if one page window is hung, the other page windows will not be affected. That is, operations on the other page windows can be performed normally, without affecting the normal execution of the application program.

### BRIEF DESCRIPTION OF THE DRAWINGS

Figure 1 is an illustrative diagram of an interface of a multi-tab browser in prior art;
Figure 2 is a flow chart of a method provided by the embodiments of the invention for realizing message interactions in a multi-tab application program;
Figure 3 is an illustrative diagram of a window structure of a multi-tab browser in prior art;
Figure 4 is an exemplary diagram of a window structure of a multi-tab browser in the embodiments of the present invention;
Figure 5 is an exemplary diagram of an interface during page window hanging in the embodiments of the present invention;
Figure 6 is an exemplary system for realizing message interactions in a multi-tab application program in the embodiments of the present invention.

### DESCRIPTION OF THE PREFERRED EMBODIMENTS

To better understand the above-mentioned objectives, features and advantages of the present invention, the followings further provide detailed illustrations of the present invention in combination with the drawings and detailed embodiments.

Referring to Figure 2, the present embodiments provide a method realizing message interactions in a multi-tab application program and including the following steps:

S201: Creating one or more page windows corresponding to respective tabs in a multi-tab application program as top-level windows;

S202: Performing user message interactions in the top-level windows. That is, performing message interactions related to the page windows, such as the message interactions between a main frame window of the application program and the page windows as the top-level windows, etc.

To facilitate understanding, the followings briefly explain concepts of multi-tab application programs and of windows and top-level windows in operating systems, etc., referred to in the embodiments of the present invention. With respect to tabs, referring to Figure 1, an interface of a conventional multi-tab web browser is illustrated. In Figure 1, small rectangular boxes labeled as " 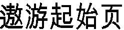 (Tour Start Page)," " 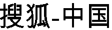 ...(Sohu - China ...)," and " 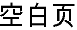 (Blank Page)," are tabs of individual web pages, and each tab corresponds to a web page window. The so-called multi-tab application program integrates the page windows corresponding to the individual tabs to be displayed in a single window, and switches between different pages when the tabs are clicked upon. For example, the web page browser shown in Figure 1 can include multiple tabs at the same time and thus is called a multi-tab web browser.

The multi-tab application programs as described in the embodiments of the present invention include, but not limited to, multi-tab web browsers, multi-tab document editors (e.g., excel, etc.), and multi-tab document readers, etc.. In addition, it should be noted that, an application program can be a single-process application program or a multi-process application program, and the page windows corresponding to the individual tabs can be created in a single process or can be created in multiple processes. However, whether being created in a single process or in multiple processes, the page windows may all have the hanging spreading problem. Solutions to such problem by embodiments of the present invention can be applied to single-process application programs as well as multi-process application programs.

A window, as described in the embodiments of the present invention, refers to an area of a system display. An application program uses the window to display outputs or to receive inputs from a user. It should be noted that, the "window" as described in the embodiments of the present invention is not limited to Windows and other traditional window-based operating systems. Even in non-Windows operating systems, as long as a human-computer interaction (HCI) interface (such as a dialog box, etc.) is provided on the computer interface, it can be regarded as the window as described in the embodiments of the present invention. On one hand, the application program accesses the system display through the window; on the other hand, the application program shares the system display with other application programs using the window. Because only one window can receive user inputs at any given time, the user can interact with the windows and the applications programs owning the windows through mouse, keyboard and other input devices.

The Windows family operating system is used here as an example. In the Windows operating system (also including other window-based graphical operating systems, such as Mac-specific operating system, mac, etc.), every graphical-interface-based application program needs to create at least one window, which is called a main frame window. This window is the main interface between the user and the application program. Many application programs may directly or indirectly create some other windows to complete related tasks. Once a window is created, the Windows system will be able to provide the window with corresponding user interaction messages. The Windows system can automatically complete many tasks requested by the user, such as moving the window, adjusting the window size, etc. In the Windows environment, any number of windows can be created. The Windows can display information in a variety of ways and is responsible for managing display screen and controlling the positions and displays of the windows to ensure that no two application programs compete for the same part of the system display at the same time.

An application program window generally comprises a title bar, menu bars, toolbars, borders, client areas, scroll bars and other components. The relationship among multiple windows is normally a tree-based connection relationship, i.e., one window may have 0, 1, or 2 or more child windows, while each child window can only have one fixed parent window. If a particular window does not have a parent window or is a desktop window (a window with a window class of #32769 is called a desktop window), this particular window is called a top-level window.

Still using the Windows operating system as an example, running a Windows application program needs to rely on external events as drives, and the information describing the external events are called messages. For example, when the user presses a key on the keyboard, the system will generate a specific message indicating an occurrence of the keyboard-being-pressed event. The so-called event-driven refers to that the execution order of a Windows application program depends on the order of the occurrences of the events, and design of event-driven programs is centered on generating and handling the messages. When running, a Windows application program continuously receives any possible input messages, makes a decision, and then performs appropriate processing.

The various messages obtained by an application program can be categorized as input messages generated by hardware devices and system messages from the Windows operating system.

The application program receives inputs from the input messages. For example, mouse movement or keyboard being pressed can generate input messages. The Windows system is responsible for monitoring all input devices and placing the input messages into a queue, which is a system-defined memory block for temporarily storing the messages, so-called the system message queue. Each graphics device interface (GDI) thread running in the Windows system has its own message queue.

When the user moves the mouse or presses the keyboard, the resulting input messages are first placed into the system message queue. Then, the Windows system removes one input message each time from the system message queue, determines a destination window for the removed input message, and sends the removed input message into a message queue of the application program that created the destination window. An application program receives inputs by an application program queue: the application program uses a control structure called a message loop to retrieve messages from the application program queue and sends the retrieved message to a corresponding window. The window function of the corresponding window is then responsible for checking the message and performing appropriate processing.

System messages are different from input messages. The Windows system directly sends a system message to the appropriate window function, instead of sending through the system message queue and the application program queue. In this way, the Windows system directly notifies a particular window of an event affecting the particular window. For example, when the user activates an application program window, the Windows system will send corresponding system messages directly to the activated window.

It should be noted that, in general, a message can be sent in two modes: a blocking mode (such as 'SendMessage,' etc.) and a non-blocking mode (such as 'PostMessage,' `PostThreadMessag,' 'SendMessageCallback,' 'SendNotify Message,' and 'SendMessageTimeout,' etc.). Those skilled in the art normally refer 'SendMessage' as a synchronous message sending method; refer 'PostMessage,' 'PostThreadMessage,' 'SendMessageCallback,' and 'SendNotifyMessage' as asynchronous message sending methods, and refer 'SendMessageTimeout' as a synchronous message sending method with a timeout mechanism. For example, assuming that the window B does not belong to thread A (whether the window B belongs to thread A is determined by which thread the window B was created in, i.e., if the window B was created in thread A, the window B belongs to thread A, otherwise the window B does not belong to thread A), when thread A sends a message to window B, different message sending modes may have the following characteristics:

If thread A sends a message M to the window B in a blocking mode, thread A must wait until the window B completes processing the message M before thread A can continue to run. When the window B is processing the message M, any problem such as an infinite loop or a deadlock, etc., happened during the process may prevent the message processing from returning. At this point, the window B is considered as being hung, then thread A cannot continue to run or to receive and process other messages. Thus, the hanging of the window B can directly cause the hanging of the thread A, and all windows in thread A are hung afterwards.

If the message is sent in a non-blocking mode, the thread A can return immediately after sending the message to window B, without the need to wait until the window B completes processing the message M (if using 'PostMessage' and other asynchronous methods, there is no need to wait; if using 'SendMessageTimeout,' a waiting time threshold can be pre-set, and if the thread A wait for a time period longer than the preset threshold, thread A can stop waiting and return to handle other messages). Thus, if the window B is hung, thread A can continue to run.

It should be noted that, in the above-mentioned two cases, the window B does not belong to thread A. If the window B belongs to thread A, then window hanging will spread regardless whether the message is sent in the blocking mode or the non-blocking mode. That is, the hanging of the window B will always affect thread A. In addition, the window B can be a child window or a top-level window, and the window structure does not affect the above performance.

Among the various messages received by an application program, the message sending mode for the input messages is usually determined by the application program (usually set to the non-blocking mode); while the sending mode for system messages is generally determined by the operating system. Using currently the most widely used Windows operating system as an example, the Windows operating system sends system messages in the blocking mode (normally using the 'SendMessage').

To better understand the methods provided in the embodiments of the present invention, the followings use a multi-tab web page browser as an example to analyze reasons why, in the multi-tab browser, once a page is hung, the other pages cannot be operated on.

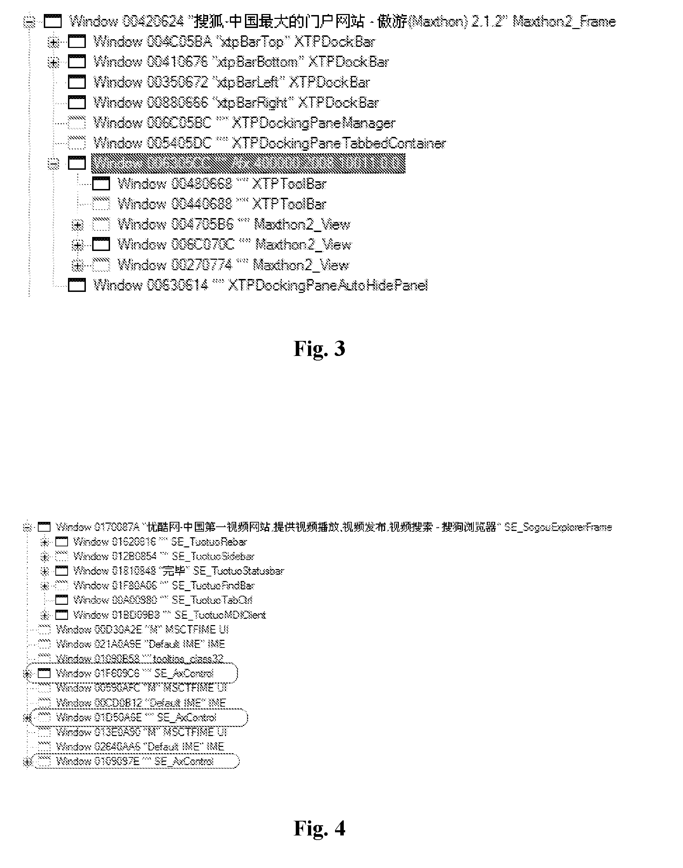

When creating windows, current multi-tab web page browsers usually have the page windows corresponding to different tabs inherit from a same parent window. For example, Figure 3 shows the window structure of the Yaoyou browser browsing the same web page as in Figure 1.

In Figure 3, "Maxthon2_View" is the window for displaying web page contents, and is simply called the page window. It should be noted that, Maxthon2_View is just a container window, it also has other child windows, such as the Internet Explorer_Server (not shown), etc. configured to display the web page contents. Because three (3) web pages are currently opened, there are three Maxthon2_View page windows in the window structure, and all of these three page windows have the "Afx:400000:2008:10011:0:0" window as the parent window.

In other words, each tab corresponds to a web page, and each web page is managed by a group of windows (referring to a group of child windows (not shown) under the '+' sign in front of "Maxthon2- View" in the window structure chart). The group of child windows have a parent window (i.e., "Maxthon2_View"), and their parent window (i.e., "Maxthon2_View") also has a parent window (i.e., the "Afx:400000:2008:10011:0:0" in the above window structure).

In this window structure, when the user performs a certain operation on a page corresponding to a tab (such as a web page zoom operation), the processing flow is as follows: the user first clicks the zoom button, and then the window containing this button notifies the main frame window with a message of being clicked. The main frame window finds the page window corresponding to the currently-displayed tab, and sends a zoom operation message to the page window. The page window then receives the message and performs the zoom operation. Of course, in this period, because of the characteristics of the Windows operating system (as previously described), certain system messages may be exchanged between windows. These system messages are sent by the Windows operating system in the blocking mode. Thus, only after all system messages have been responded to, the operation on the page window can be completed.

For example, in the window structure shown in Figure 3 (for clarity, "05B6," "070C," and "0774" are used to respectively represent page windows "Window 004705B6""Maxthon2_View," "Window 006C070C""Maxthon2_View" , and "Window 00270774""Maxthon2_View"), assuming that the window corresponding to the currently-displayed tab is "05B6" and the user clicked the zoom button, when the main frame window "Maxthon2_Fram" sends the zoom operation message to "05B6" page window, the parent window of the "05B6" page window "Afx: 400000:2008:10011:0:0" needs to send a system message(s) to each of its child windows (e.g., "05B6," "070C," and "0774") in the blocking mode. Further, only after all the system messages are responded, the zoom operation on the page window "05B6" can be completed.

At this point, if the currently-displayed "05B6" is hung, when the user wants to operate on the "070C," the parent window "Afx: 400000:2008:10011:0:0" of the page window "070C" still needs to send system messages to each of its child windows (e.g., "05B6", "070C" and "0774") in the blocking mode. However, because the "05B6" is hung, "05B6" cannot respond after the parent "Afx:400000:2008:10011:0:0" sends the system messages to the "05B6." Thus, the parent window "Afx: 400000:2008:10011:0:0" is forever in a waiting state, and the operation to the "070C" cannot be completed. In order to complete the operation on the "070C," the parent window "Afx:400000:2008:10011:0:0" also needs to send system messages to each of its child windows including the "070C." However, because the hung "05B6" could not respond to the parent window "Afx:400000:2008:10011:0:0" and, due to the blocking mode, parent window "Afx:400000:2008:10011:0:0" cannot perform other operations until receiving a response from the page window "05B6," the parent window "Afx:400000:2008:10011:0:0" cannot complete sending system messages to all child windows in order to complete the user operation on the "070C." Thus, the user operation on the "070C" is forever in a waiting state, and the "070C" can no longer respond to system messages. Similarly, any operation to the "0774" cannot be completed as well. That is, based on the parent-child relationship between window "Afx:400000:2008:10011:0:0" and page windows "05B6," "070C," and "0774," completing any operation on a page window requires the parent window "Afx:400000:2008:10011:0:0" to send system messages to each of its child windows in the blocking mode. Therefore, hanging of any of the page windows can directly affect the other page windows as becoming unable to be operated on.

If all the system messages inside the Windows system can be sent in the non-blocking mode, then an application program can naturally be prevented from being hung, as long as the different windows are placed in different threads. But as mentioned before, this is in fact not the case. Only certain peripheral messages (such as mouse, keyboard, etc.) and drawing messages (WM_PAINT, WM_NCPAINT, etc.) are sent in the non-blocking mode. Other system messages (such as notice to change size WM_SIZE, notices to change location WM_POSCHANGING and WM_POSCHANGED, etc.) are sent in the blocking mode.

Assuming that the window B has been hung, if the thread A sends a message to the window B in the non-blocking mode, execution of the thread A will not be affected (only that the message is not processed in time). But if the thread A sends a system message to the window B (the system message is typically sent in the blocking mode), then the thread A will be hung following the hanging of window B. Because these system messages are implemented within the Windows system, the spreading of page window hanging cannot be prevented by modifying third-party application programs (such as browsers).

When performing user messages interactions in a multi-tab application program, the following system messages may usually be generated and sent in the blocking mode:

A parent window has one or more child windows. When the parent window has focus (for example, the main frame window of the browser becomes the current active window by certain operation), the Windows system sends a "WM_CHILDACTIVATE" message in the blocking mode.

It should be noted that, in some operating systems (such as the Windows operating system), there may be situations where a number of top-level windows (A, B, C ...) have a common "owner" window O. When the size or display state of one top-level window changes, the owner window O will send WM_POSCHANGING and WM_POSCHANGED messages to other top-level windows (B, C ...) in the blocking mode. Of course, these situations might not exist in other operating systems.

As it can be seen from the above analysis, a root cause to the problem of hanging of one window resulting in the entire browser being unable to operate normally is: the page windows corresponding to the individual tabs have a common parent window and, when the individual page windows respond to user input messages, the parent window sends (in the blocking mode) system messages to the individual page windows. Only when every system message can be normally processed, the user message interaction can be completed. Therefore, if a page window A is hung, when the parent window sends a system message to the page window A, the page window A will not be able to return a response message to the parent window, which causes the parent window being in a waiting state forever. At this point of time, if operations need to be performed on other page windows, the parent window cannot respond. Thus, the operations on the other page windows cannot be completed, which may even cause the entire application program not being able to run normally.

In addition, in the above example shown in Figure 3, the individual page windows are child windows of "Afx:400000:2008:10011:0:0," and "Afx:400000:2008:10011:0:0" is also a child window of the main frame Window. Thus, in this example, the relationship between the main frame window and the individual page windows is not a direct parent-child relationship. In practice, however, those skilled in the art understand that, due to the difference in designing the various multi-tab application programs, there may exist situations where the individual page windows are direct child windows of the main frame window (i.e., a direct parent-child relationship between them) or where multiple levels of windows exist between the individual page windows and the main frame window, etc. But no matter in which situation, the individual page windows have a parent window, and the parent window will send system messages to the individual page windows in the blocking mode. Thus, the phenomenon of hanging spreading always exists.

However, in practice, it might not have a practical significance for the parent window to send a system message to the individual page windows in the blocking mode (the operating system may use the system message, but the application program might not use the system message. In other words, even if the Windows system does not send this system message, the application program can still run correctly). When the individual page windows receive the system message, the individual page windows may only need to return a response message without any other processing. That is, in fact, if the parent window did not send a system message to the individual page windows, the currently-displayed page window still can handle user input messages.

Therefore, in the embodiments of the present invention, the page windows corresponding to the multiple tabs in the multi-tab application program are created as the top-level windows, at the same level as the main frame window. Thus, there is no parent window sending any system message to the individual page windows in the blocking mode. Of course, in Windows and other operating systems, the individual page windows may still have a common owner, and the owner may also send a system message to the individual page windows. To avoid the owner window sending the system message to the individual page windows, the owner of the top-level windows is set to empty.

Thus, with respect to the window structure, an application program previously corresponding to a single tree structure now corresponds to multiple tree structures (the number of the tree structures is determined by the number of the tabs in the application program). Figure 4 illustrates the window structure of a multi-tab browser provided in the embodiments of the present invention. As shown, SE_AxControl is the page window corresponding to each tab. It can be seen that, this structure makes the page window corresponding to a tab no longer have a parent window (or have the desktop as the parent window). Thus, when a page window responds to a user input message, there is no longer a parent window sending messages to the individual page windows, and every page window is independent among one another. Thus, when responding to user input messages, even if a particular page window is hung, the other page windows are not affected. The user can continue browsing the other page windows and may be able to close or reload the hung page window.

Thus, when the methods disclosed in the embodiments of the present invention are used (creating the page windows as the top-level windows), although there may exist a number of relationships between the previous main frame window and the page windows (a direct parent-child relationship or being separated by multiple levels of windows), there is no parent window sending system messages to the page windows as the child windows. This may provide a fundamental solution to the hanging spreading problem caused by the need for the operating system to send system messages.

For example, in the window structure shown in Figure 4 (for clarity, "09C6", "0A6E", "097E" are used to respectively represent page windows "Window 01F609C6""SE_AxControl", "Window 01D50A6E""SE_AxControl", and "Window 0109097E""SE_AxControl"), assuming that the currently-displayed tab corresponds to the page window "09C6," when the user causes the main frame window of the browser becoming the current active window through certain operation (e.g., the user clicks the browser's title bar with a mouse), the main frame window "SE_SogouExploreFrame" can be used to send corresponding messages to "09C6" page window, and the operation can then be directly performed without causing any system message to be generated. That is, because the page windows ("09C6", "0A6E", "097E") have no parent window and the owner of these page windows can also be set to empty, the thread where the browser's main frame window belongs does not send any system message to the page windows as well.

At this point, if the currently-displayed "09C6" is hung, because there is not a common parent window for the "09C6," "0A6E," and "097E" that needs to send a system message to these page windows in the blocking mode in order to facilitate completing the operation on the currently-displayed page window, there is not a common parent window for the "09C6," "0A6E," and "097E" that is not able to process other system messages because the "09C6" cannot respond to the parent window. Thus, when the user needs to perform operation on the "070C," only the main frame window "SE_SogouExploreFrame" needs to send the input message to the"070C" and the operation on the "070C" can be completed, without involving a parent window sending a system message to the page windows as the child windows in the blocking mode to complete the operation on the page windows. Similarly, operation on the "0774" can also be completed. Thus, according to the disclosed technical solutions according to the embodiments of the present invention, page window hanging will no longer spread and the entire application program will not be affected.

It should be noted that, in the embodiments of the present invention, the various input message interactions can be performed in either the non-blocking mode or the blocking mode. Of course, if the non-blocking mode is used, when the main frame window sends a message to a page window, the main frame window can return to process messages from other page windows, without waiting for the page window to finish processing the message. Thus, the results may be better. Those skilled in the arts understand that, the multi-tab application program itself can control which mode is used by the main frame window to send a message to a page window or what message to generate, etc. In other words, this can be done by modifying the third-party application program (e.g., the browser). However, in the situations previously mentioned, the parent window sending the system message to child windows (pages windows in prior art) in the blocking mode is controlled by the Windows operating system, and not the third-party application program (browser). Thus, the mode for sending the system message cannot be changed by modifying the third-party application program, which becomes the most difficult part for solving the problem of page window hanging spreading. The embodiments of the present invention provide a different approach. By changing the page windows from the original form of child windows to the top-level windows, the page windows no longer have a parent window. Thus, there no longer exists a situation where the Windows operating system requires a certain parent window to send a system message to the individual page windows, which ultimately solves the problem of page window hanging spreading.

As previously described, if two or more windows belong to a same thread, both the blocking mode and the non-blocking mode can cause the hanging spreading. Therefore, in the embodiments of the present invention, in order to achieve a more desired result for preventing the hanging from spreading, different windows may be made to belong to different threads (e.g., different page windows belong to different threads, and/or the main frame window and the page windows belong to different threads) to further reduce the occurrence of the hanging spreading. Of course, some multi-tab application programs themselves are multi-threaded, i.e., different page windows and the main frame window are already created by different threads. Thus, these multi-tab application programs no longer need thread-related modifications.

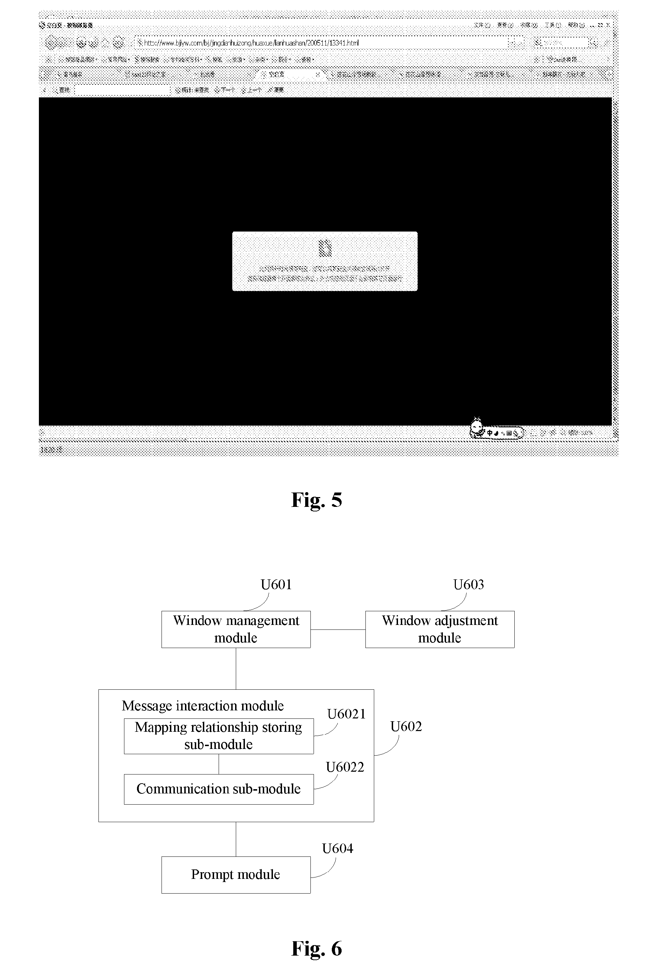

In addition, if it is determined that a specific page window is hung, the user can be prompted (informing the user of the occurrence of the hanging of the page window and reminding the user to close or reload the page window, see Figure 5). Therefore, the embodiments of the present invention effectively enhance the user experience.

With respect to how to determine whether a page window is hung, some alternative methods may be used for such testing. For example, within a period of time (e.g., 5 seconds), if the page window does not process any message sent to the page window, it is considered that the page window may be hung, etc. It should be noted that, in fact, it might be impossible to accurately detect whether the page window is hung (even the Windows system itself cannot achieve this) and, thus, certain false detections may occur.

With respect to implementing the message interactions between the main frame window and the page windows, it should be noted that: there is a certain mapping relationship between the main frame window and the page window corresponding to an individual tab. Communication between the main frame window and the page window may be achieved based on this mapping relationship in order to complete message interactions with the user. In the traditional window structure such as that of a browser like the Yaoyou browser, the Windows system can automatically create such mapping relationship. The main frame window only needs to use a system function (e.g., GetWindow(CHILD)) to get the page window and then sends a messages to the page window.

However, in the embodiments of the present invention, this traditional window structure is broken down, and the Windows system may be unable to automatically create the mapping relationship between the main frame window and the page window. Thus, there is no function to be called to get the page window. In the above situation, to achieve the normal communication between the main frame window and the page window, the following methods can be used by embodiments of the present invention: when creating the page window corresponding to the individual tab as a top-level window, the mapping relationship between the main frame window and the page window can also be created and such mapping relationship can be stored. Thus, after the main frame window receives the message from the user, the main frame window can find the corresponding page window based on the pre-stored mapping relationship and then sends the message to the page window. The message can be sent in the non-blocking mode. Further, the page window performs corresponding operation according to the received message. Such operation may include zoom operation, switch operation, or lookup operation, etc. Of course, in the future, it might be possible that the Windows system or other operating systems can, using the window structure described in the embodiments of the present invention, automatically create the mapping relationship between the main frame window and the page window.

In the embodiments of the present invention, the page window corresponding to a tab can be created or made as a top-level window at any time according to the actual needs. A preferred way is, when creating a new tab, to create the page window corresponding to the created tab as the top-level window. Further, in a multi-tab browser, creating the new tab may include two approaches: one is to create the new tab when the user double-clicks the tab bar and the page window corresponding to the new tab is blank; and the other is to create the new tab automatically by the browser when a certain web page is opened in the page window corresponding to the new tab, normally by clicking a link in the currently-displayed page. This approach may have more significance in a multi-tab document editor. For example, in 'excel,' page window hanging not only can occur during the document editing process, but also can occur when opening an excel document. When an excel document is being opened, if a page window corresponding to a tab is hung and the page window corresponding to the tab was not created as the top-level window, it might be unable to check data in other page windows that were not hung. Thus, creating the corresponding page window as the top-level window when creating the new tab can prevent this situation from happening.

It should be noted that, in the methods provided by the embodiments of the present invention, the main frame window and the page window corresponding to the tab are independent with each other, unlike in the traditional structure, where the page window corresponding to the tab is a child window of a certain child window of the main frame window. Without necessary configuration, the size and location of the main frame window and the page window can be arbitrary. However, to enable the user to get a better visual effect, the location and size of the page windows corresponding to the tabs may be adjusted adaptively to match the location and size of the main frame window. In other words, the browser interface finally shown in front of the user might not be different from that of the Yaoyou and other browsers. However, in fact this browser interface is not a single entity, but multiple entities connected together. Such interface provided to the user by the embodiments of the present invention can be called "asynchronous user interface (UI)." This user interface can prevent from happening situations where hanging of one tab page window causes inoperability of the browser frame or other tab page windows.

Those with ordinary skill in the art can understand that all or part of the above methods can be achieved by computer programs instructing corresponding hardware. The computer programs can be stored on a computer readable storage medium. The computer programs, when being executed, include the following steps: creating a page window corresponding to a tab in a multi-tab application program as a top-level window; and performing message interactions in the multi-tab application program. The described storage medium can be, for example, a ROM/RAM, disk, and CD-ROM, etc.

Corresponding to the method for performing message interactions in the multi-tab application program provided in the embodiments of the present invention, a system for performing message interactions in the multi-tab application program is also provided in the embodiments of the present invention. Referring to Figure 6, the system includes:

Window management module U601, which is used to create the page windows corresponding to the tabs in the multi-tab application program as the top-level windows. According to the previously described methods, the main frame window of the multi-tab application program is also a top-level window. Thus, after the page windows are created as the top-level windows, the page windows and the main frame window are at the same level, all being top-level windows.

Message interaction module U602, which is used to perform user message interaction among the top-level windows, i.e., message interactions related to the page windows, such as message interactions between the main frame window in the application program and the page windows, now being the top-level windows.

Further, window management module U601 creates the page windows corresponding to the tabs in the multi-tab application program as the top-level windows, and performs message interactions in the multi-tab application program. The page windows corresponding to the tabs can be made to have no parent window. Thus, when responding to messages, there is no parent window to send system messages to the page windows in the blocking mode. Therefore, even if a certain page window is hung, other page windows will not be affected and the user experience is enhanced.

Also, in Windows and other operating systems, to prevent the owner window of the top-level windows from sending messages to the page windows, window management module U601 can create the page windows corresponding to the tabs in the multi-tab application program as top-level windows having an empty owner. It should be noted that, in non-Windows operating systems, there may not involve the empty owner issue. It may only require that the page windows corresponding to the tabs are created as top-level windows, and the goal that, when a user operates on a certain page window, no parent window needs to send system messages to its child windows, i.e., the page windows, in a blocking mode can be achieved. Further, the goal to reduce the possibility of occurrence of the hanging spreading can also be achieved.

Corresponding to the previously described methods, to further reduce the occurrence of the hanging spread, message interaction module U602 can be specifically used in the main frame window of the multi-tab application program to send messages to the page windows using the non-blocking mode.

During the process of responding to messages under the window structure created by the embodiments of the present invention, the main frame window can send messages to the page windows corresponding to the tabs and the page windows can perform corresponding operation. This needs a mapping relationship between the main frame window and the page windows. However, the window structure created by the previously described methods breaks the traditional window structure. The operating system is unable to automatically create the mapping relationship between the main frame window and the page windows. Thus, when creating the top-level windows, the mapping relationship between the main frame window and the page windows is also created and stored. Thus, message interaction module U602 can include the following sub-modules:

Mapping relationship storing sub-module U6021, which is used to create and store the mapping relationship between the main frame window of the multi-tab application program and the page windows;

Communications sub-module U6022, which is used to trigger the main frame window to send a message to a top-level page window corresponding to a specific tab, and to trigger the top-level page window to perform a specific operation corresponding to the received message. To make the finally-shown interface more consistent with ways used to by the user, the system can also include:

Window adjustment module U603, which is used to adjust the location and size of the page windows such that the page windows match the location and size of the main frame window.

In addition, the system can also include:

Prompt module U604, which is used to, when a page window corresponding to a certain tab is hung, prompt the user with certain reminding information, including prompting the user to close or reload the page window, etc.

In preferred embodiments of the present invention, when a new tab is created, for example, when creating a new blank page or opening a page in a new window, the page window corresponding to the new tab is created as a top-level window. This approach is particularly advantageous for multi-tab document editors for avoiding the situation where, during the process of opening a document, hanging of one page causes the entire document not being able to be opened. Of course, the page window corresponding to a tab can be created as a top-level window at any time according to actual needs, e.g., creating the top-level windows when a large number of page windows are opened.

Corresponding to the previously described methods, to further reduce the occurrence of hanging spreading, the system can also include:

First creation module, which is used to create page windows corresponding to different tabs in the multi-tab application program in different threads. Because a window belongs to a thread if the window is created in that thread, this multi-thread creation module can be used to have page windows corresponding to different tabs in the multi-tab application program belong to different threads.

In addition, during a specific message interaction, the main frame window of the multi-tab application program may need to send messages to individual page windows as top-level windows. As described in the previously mentioned methods, if the main frame window and the page windows belong to a same thread, regardless whether the blocking mode or the non-blocking mode is used to send messages, the hanging spreading between the main frame window and the page windows might still occur. Therefore, preferably, the system can also include:

Second creation module, which is used to create the main frame window and the page windows corresponding to the tabs in different threads. That is, the main frame window of the multi-tab application program and each page window belong to the different threads. Thus, because these two windows do not belong to a same thread, when the main frame window needs to send a message to a page window, so long as the message is sent in the non-blocking mode, it will not cause the occurrence of the hanging spreading.

The above detailed descriptions illustrate a method and system for performing message interactions in a multi-tab application program, as provided by the present invention. Individual examples are used to illustrate the principle and implementation of the present invention. However, the examples and embodiments are only used to help understanding the methods and spirit of the present invention. Also, for those with ordinary skill in the art, particular implementations and application scope may be changed based on the principles of the present invention. In summary, the contents of this specification should not be interpreted as any limitation to the present invention.

## Claims

1. A method for performing message interactions in a multi-tab application program, comprising:
creating one or more page windows corresponding to respective tabs in the multi-tab application program as one or more top-level windows; and
performing message interactions related to the one or more page windows.

2. The method according to claim 1, wherein creating the one or more page windows corresponding to respective tabs in the multi-tab application program as one or more top-level windows further includes:
creating the one or more page windows corresponding to the respective tabs in the multi-tab application program as one or more top-level windows at the same level as a main frame window of the multi-tab application program.

3. The method according to claim 1, wherein performing the message interactions related to the page windows includes:
sending, by a main frame window of the multi-tab application program, one or more messages to the one or more page windows in a non-blocking mode.

4. The method according to claim 3, wherein the non-blocking mode includes:
an asynchronous message sending mode or a synchronous message sending method with a time-out mechanism.

5. The method according to claim 1, wherein performing the message interactions related to the page windows includes:
creating and storing a mapping relationship between a main frame window of the multi-tab application program and the one or more page windows;
sending, by the main frame window, one or more messages to the one or more page windows based on the mapping relationship between the main frame window and the one or more page windows;
triggering the one or more page windows to perform one or more operations corresponding to received messages.

6. The method according to any of claims 1-5, further comprising:
adjusting location and size of the page windows to match a location and size of a main frame window of the multi-tab application program.

7. The method according to any of claims 1-5, further including:
when hanging of a page window corresponding to a tab is determined, prompting a user.

8. The method according to any of claims 1-5, wherein creating the one or more page windows corresponding to respective tabs in the multi-tab application program as one or more top-level windows further includes:
when creating a new tab in the multi-tab application program, creating the page window corresponding to the new tab as a top-level window.

9. The method according to any of claims 1-5, wherein the multi-tab application program includes a multi-tab web page browser, a multi-tab document editor, or a multi-tab reader.

10. The method according to any of claims 1-5, wherein:
the page windows corresponding to the tabs in the multi-tab application program belong to different threads;
and/or,
a main frame window of the multi-tab application program and the one or more page windows corresponding to the tabs belong to different threads.

11. The method according to any of claims 1-5, wherein creating the one or more page windows corresponding to respective tabs in the multi-tab application program as top-level windows further includes:
creating the one or more page windows corresponding to the respective tabs in the multi-tab application program as one ore more top-level windows with an empty owner.

12. A system for performing message interactions in a multi-tab application program, comprising:
a window management module configured to create one or more page windows corresponding to respective tabs in the multi-tab application program as one ore more top-level windows;
a message interaction module configured to perform message interactions related to the page windows.

13. The system according to claim 12, wherein the window management module is further used to create the one or more page windows corresponding to the respective tabs in the multi-tab application program as one ore more top-level windows at the same level as a main frame window of the multi-tab application program.

14. The system according to claim 12, wherein the message interaction module is further used in a main frame window of the multi-tab application program to send one ore more messages to the one or more page windows in a non-blocking mode.

15. The system according to claim 12, wherein the message interaction module further includes:
a mapping relationship storing sub-module configured to create and store a mapping relationship between a main frame window of the multi-tab application program and the one ore more page windows;
a communication sub-module configured by the main frame window to send one ore more messages to the one ore more page windows based on the mapping relationship between the main frame window and the one ore more page windows, and also used to trigger the one ore more page windows to perform one or more operations corresponding to received messages.

16. The system according to any of claims 12-15, further including:
a window adjustment module configured to adjust a location and size of the one ore more page windows to match a location and size of a main frame window of the multi-tab application program.

17. The system according to any of claims 12-15, further including:
a prompt module configured to prompt a user when a page window is hung.

18. The system according to any of claims 12-15, wherein the window management module is further configured to, when creating a new tab in the multi-tab application program, create the page window corresponding to the new tab as a top-level window.

19. The system according to any of claims 12-15, wherein the multi-tab application program includes a multi-tab web page browser, a multi-tab document editor, or a multi-tab reader.

20. The system according to any of claims 12-15, further including:
a first creation module configured to create the page windows corresponding to the tabs in the multi-tab application program in different threads;
and/or,
a second creation module configured to create a main frame window of the multi-tab application program and the one ore more page windows corresponding to the one ore more tabs in different threads.

21. The system according to any of claims 12-15, wherein the window management module is further configured to create the one ore more page windows corresponding to the respective tabs in the multi-tab application program as one ore more top-level windows with an empty owner.

22. A computer-readable medium including computer program instructions, when the computer program instructions being executed by a computer unit, instructing the computer unit to:
create one or more page windows corresponding to respective tabs in the multi-tab application program as one ore more top-level windows; and
perform message interactions related to the page windows.
